# EUROPÄISCHE PATENTSCHRIFT

(11) **EP 3 028 354 B1**
(45) Veröffentlichungstag und Bekanntmachung des Hinweises auf die Patenterteilung: **23.12.2020**
(21) Anmeldenummer: 14747894.5
(22) Anmeldetag: 30.07.2014
(51) Int. Cl.: H01T 4/12, H01T 21/00

(54) **VERFAHREN ZUR HERSTELLUNG EINER VIELZAHL VON ABLEITERN IM VERBUND, ABLEITER UND ABLEITERVERBUND**
METHOD FOR PRODUCING A MULTIPLICITY OF SURGE ARRESTERS IN AN ASSEMBLY, SURGE ARRESTER AND SURGE ARRESTER ASSEMBLY
PROCÉDÉ DE FABRICATION D'UNE PLURALITÉ DE PARASURTENSEURS EN UN ENSEMBLE, PARASURTENSEUR ET ENSEMBLE DE PARASURTENSEURS

(30) Priorität: 02.08.2013 DE 102013012842
(43) Veröffentlichungstag der Anmeldung: 08.06.2016
(73) Patentinhaber: TDK Electronics AG, 81671 München (DE)
(72) Erfinder: HOFFMANN, Robert, 12163 Berlin (DE); WERNER, Frank, 13591 Berlin (DE)
(74) Vertreter: Epping - Hermann - Fischer
(86) Internationale Anmeldenummer: PCT/EP2014/066390
(87) Internationale Veröffentlichungsnummer: WO 2015/014898

(56) Entgegenhaltungen:
- EP-A1- 2 190 083
- DE-A1- 2 835 017
- DE-C2- 19 615 395
- JP-A- H09 306 712
- JP-A- 2000 091 053
- JP-A- 2000 243 534
- JP-A- 2001 143 846
- JP-A- 2001 189 186
- JP-A- 2010 182 560
- US-A- 1 657 452

## Beschreibung

Gegenstand der vorliegenden Erfindung ist ein Verfahren zur Herstellung einer Vielzahl von Ableitern im Verbund. Zudem wird ein Ableiter sowie ein Verbund an Ableitern angegeben, die nicht Gegenstände der Ansprüche sind.

Der Ableiter kann als Überspannungsableiter dienen. Im Inneren des Überspannungsableiters kommt es bei Überschreiten einer Grenzspannung, der Zündspannung, zu einem Lichtbogenüberschlag zwischen zwei Elektroden. Die Grenzspannung wird bei statischer oder stationärer Beanspruchung mit einem Anstieg der Spannung von 100 V/s als Ansprechgleichspannung Uag und bei dynamischer Belastung mit einem Anstieg der Spannung von 1 kV/µs als Ansprechstoßspannung Uas bezeichnet. Der Lichtbogen wird durch den speisenden Strom aufrecht erhalten, solange die elektrischen Bedingungen für den Lichtbogen gegeben sind.

Die Druckschrift DE 28 35 017 A1 zeigt ein Verfahren gemäss den Oberbegriff des Anspruchs 1 zur Herstellung eines Verbunds von Ableitern, bei dem Elektroden durch verlötete Metallteile gebildet sind.

Die Druckschriften JP 2000 243534 A, JP 2000 091053 A und DE 196 15 395 C2 zeigen jeweils ein Verfahren zur Herstellung eines Ableiters in Vielschichtbauweise, wobei die Schichten des Ableiters durch Laminieren und Sintern bzw. Aushärten bei erhöhter Temperatur miteinander verbunden werden.

Problematisch an bekannten Ableitern sind die aufwendigen und deshalb kostenintensiven Herstellungsverfahren, die zudem schlecht geeignet sind, Ableiter mit unkonventionellen Eigenschaften, zum Beispiel besonders kleine Ableiter herzustellen.

Eine zu lösende Aufgabe besteht deshalb darin, ein einfaches und damit kostengünstig durchführbares Herstellverfahren für einen Ableiter anzugeben, welches in der Lage ist, qualitativ hochwertige Ableiter und auch unkonventionelle Ableiter zu erzeugen.

Diese Aufgaben werden durch die Gegenstände der unabhängigen Ansprüche gelöst. Ausgestaltungsformen und Weiterbildungen sind Gegenstand der abhängigen Ansprüche.

Es wird ein Verfahren zur Herstellung einer Vielzahl von Ableitern im Verbund angegeben. Das Verfahren umfasst in einem Schritt das Bereitstellen eines Keramikträgers mit einer Vielzahl von Löchern und das Bereitstellen von zwei Elektrodenkörpern. In einem nachfolgenden Schritt umfasst das Verfahren das Zusammenfügen des Keramikträgers und der beiden Elektrodenkörper unter Gasatmosphäre zu einem Grundkörper, wobei der Keramikträger zwischen den Elektrodenkörpern angeordnet wird. Anschließend werden die Elektrodenkörper mit dem Keramikträger verlötet. Der so entstehende Grundkörper wird zu einer Vielzahl gasgefüllter Ableiter vereinzelt.

Der Vorteil eines solchen Verfahrens ist, dass die Herstellung von Ableitern wesentlich effizienter erfolgen kann, denn es muss nicht jeder Ableiter einzeln zusammengefügt werden. Dadurch ist das Handling der einzelnen Komponenten während des Herstellungsprozesses vereinfacht. Des Weiteren ist die Herstellzeit reduziert. Das Verfahren ermöglicht außerdem das Herstellen deutlich kleinerer als bei einzeln, i. A. manuell oder zumindest individuell, zusammengesetzten Ableitern. Auch die Fehlerquote kann im Vergleich zu manuellen Verfahren reduziert werden, weil die einzelnen Prozessschritte weniger fehleranfällig sind und die Wahrscheinlichkeit eines späteren Ausfalls des Ableiters deshalb reduziert ist.

Ein Keramikträger hat beispielsweise eine Kantenlänge von 35 mm oder mehr. Der Keramikträger hat vorzugsweise eine quadratische oder rechteckige Grundfläche. Die Grundfläche des Elektrodenkörpers entspricht vorzugsweise der Grundfläche des Keramikträgers.

Gemäß einer Ausführungsform können die Elektrodenkörper Erhebungen aufweisen, welche beim Zusammenfügen in die Löcher des Keramikträgers eingreifen. Die Erhebungen sind vorzugsweise konisch ausgebildet. Dies erleichtert das Einführen der Erhebungen in die Löcher des Keramikträgers. Die Erhebungen können auch zylinderförmig oder kuppelförmig ausgebildet sein.

Die Höhe der Erhebungen ist vorzugsweise geringer als die halbe Höhe des Keramikträgers. Dadurch werden beim Zusammenfügen der Elektrodenkörper und des Keramikträgers zu einem Grundkörper gasgefüllte Hohlräume in den Löchern des Keramikträgers gebildet.

Die Gasatmosphäre kann beispielsweise Wasserstoff oder ein Edelgas wie Helium, Neon, Argon, Krypton, Xenon oder ein Gemisch dieser Gase aufweisen.

Vor dem Verlöten des Grundkörpers kann jeweils eine Lotschicht zwischen dem Keramikträger und den Elektrodenkörpern angeordnet werden. Die Lotschicht bedeckt zumindest den Bereich, in welchem die Löcher angeordnet sind. Die Lotschicht kann beispielsweise in Form einer Lotpaste auf den Keramikträger aufgebracht werden. Insbesondere kann die Lotschicht auf beide Seiten des Keramikträgers aufgebracht werden. Die Lotschicht kann beispielsweise mittels Siebdruckverfahren aufgebracht werden. Durch das Verwenden einer vorbeloteten Keramik kann der Aufwand während der Herstellung des Grundkörpers verringert werden. In einer weiteren Ausführungsform kann die Lotschicht eine Lotfolie sein. Die Lotfolie kann eine Vielzahl von Löchern aufweisen. Die Größe und Anordnung der Löcher in der Lotfolie kann mit denen des Keramikträgers übereinstimmen.

Gemäß einer Ausführungsform werden die Hohlräume in den Löchern des Keramikträgers beim Verlöten des Grundkörpers durch das Lot abgedichtet.

Der Grundkörper kann während des Vereinzelns durch Sägen, Wasserstrahlschneiden oder Laserschneiden zu einzelnen Ableitern zerteilt werden.

Der Keramikträger kann eine Matrix aus 15 x 15 Löchern aufweisen. Die Löcher können in einem Bereich angeordnet sein, welcher eine quadratische oder rechteckige Fläche aufweist. Die Fläche auf welcher die Löcher angeordnet sind hat beispielsweise eine Kantenlänge von 15 mm oder mehr. Die Löcher weisen vorzugsweise gleiche Abstände zueinander auf. Die Löcher sind vorzugsweise in Reihen und Spalten angeordnet. Dadurch ist das Vereinzeln des Grundkörpers erleichtert. Insbesondere kann vermieden werden, dass einzelne Ableiter beim Vereinzeln des Grundkörpers beschädigt werden. Der Keramikträger kann auch eine andere Anzahl an Löchern aufweisen. Beispielsweise kann der Keramikträger eine Matrix aus 10 x 20 oder 15 x 20 Löchern aufweisen.

Des Weiteren wird ein gasgefüllter Ableiter angegeben, der mit dem vorgehend beschriebenen Verfahren hergestellt werden kann. Der Ableiter an sich ist nicht Gegenstand der Ansprüche. Der Ableiter weist eine Höhe von maximal 2 mm und Elektrodenflächen von maximal 1,2 x 1,2 mm² auf. Die Elektrodenflächen entsprechen der Grundfläche des Ableiters. Die Elektrodenflächen können quadratisch oder rechteckig sein.

Der Vorteil eines Ableiters mit einem derartigen Größenverhältnis ist, dass er aufgrund seines geringen Materialeinsatzes besonders günstig ist. Des Weiteren kann der Ableiter aufgrund seiner geringen Größe besonders einfach in andere Komponenten, zum Beispiel auf einer Leiterplatte, integriert werden. Zudem ist ein derartiger Ableiter weniger fehleranfällig, weil die einzelnen Prozessschritte weniger fehleranfällig sind und die Wahrscheinlichkeit eines späteren Ausfalls des Ableiters deshalb reduziert ist.

Im Folgenden wird die Erfindung anhand von schematischen Figuren erläutert.

Es zeigen:
- Figur 1: einen Keramikträger und zwei Elektrodenkörper in einer Explosionsdarstellung,
- Figur 2: einen Grundkörper in einer Schnittdarstellung,
- Figur 3a: einen Ableiter in einer Schnittdarstellung,
- Figur 3b: einen Ableiter,
- Figur 4: eine Lotfolie,
- Figur 5: einen Keramikträger mit einer Lotschicht,
- Figur 6: einen Keramikträger in einer Schnittdarstellung,
- Figur 7: einen Elektrodenkörper,
- Figur 8: einen Elektrodenkörper in einer Schnittdarstellung.

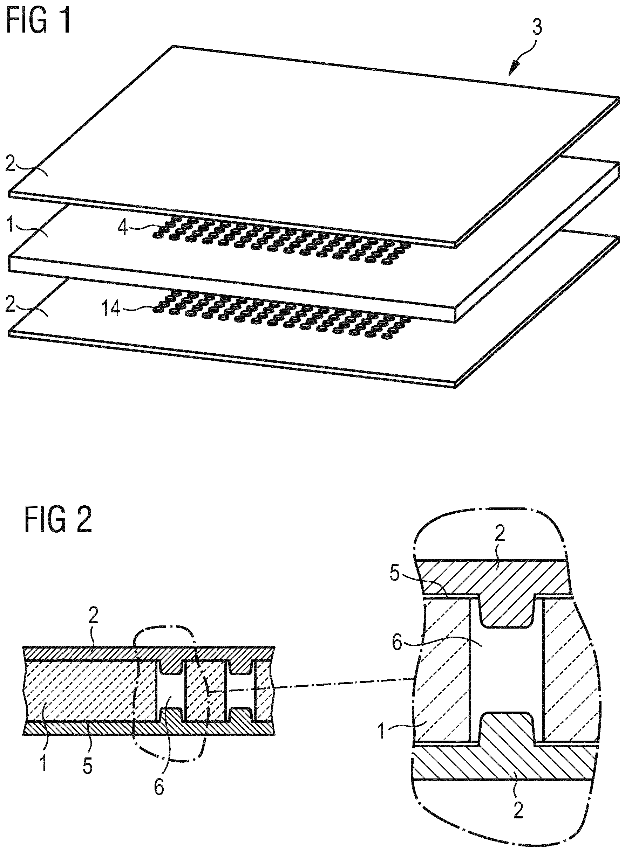

Figur 1 zeigt einen Keramikträger 1 und zwei Elektrodenkörper 2. Der Keramikträger 1 weist eine Vielzahl von Löchern 4 auf. Die Elektrodenkörper 2 weisen eine Vielzahl von Erhebungen auf. Der Keramikträger 1 und die Elektrodenkörper 2 bilden zusammen einen Grundkörper 3. In Figur 1 ist der Grundkörper 3 in einer Explosionsdarstellung gezeigt. Zwischen dem Keramikträger 1 und den Elektrodenkörpern 2 befindet sich jeweils eine Lotschicht (hier nicht gezeigt).

Figur 2 zeigt einen Ausschnitt eines Grundkörpers 3 in einer Schnittdarstellung. Die Elektrodenkörper 2 und der Keramikträger 1 sind mittels einer Lotschicht 5 verlötet. Die Löcher 4 des Keramikträgers 1 bilden Hohlräume 6, welche von den Elektrodenkörpern 2 begrenzt werden. Die Lotschicht 5 dient dabei auch zum Abdichten der Hohlräume 6. Die Montage des Grundkörpers 3 erfolgt in einer Gasatmosphäre, so dass auch die Hohlräume 6 mit einem Gas gefüllt sind.

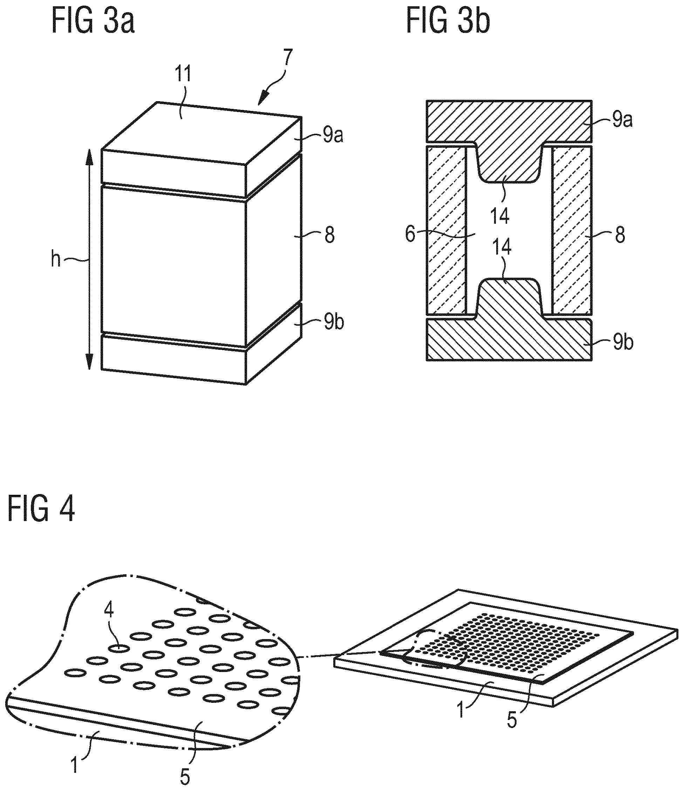

Figur 3a zeigt einen vereinzelten Ableiter 7. Der Ableiter 7 weist einen Keramikkörper 8 und zwei Elektroden 9a, 9b auf. Zwischen den Elektroden 9a, 9b ist ein gasgefüllter Hohlraum 6 angeordnet, welcher in Figur 3b dargestellt ist.

Figur 3b zeigt den Ableiter 7 aus Figur 3a in einer Schnittdarstellung. Der Ableiter 7 weist besonders kleine Abmessungen auf. Beispielsweise weist der Ableiter 7 eine Höhe h von 2 mm auf. Eine Elektrodenfläche 11 des Ableiters 7 beträgt beispielsweise 1,2 x 1,2 mm². Die Elektrodenfläche 11 entspricht einer Grundfläche des Ableiters 7. Der Ableiter 7 kann auch kleinere Abmessungen aufweisen. Beispielsweise kann der Ableiter 7 eine Höhe h von 1 mm und eine Elektrodenfläche 11 von 0,5 x 0,5 mm² aufweisen.

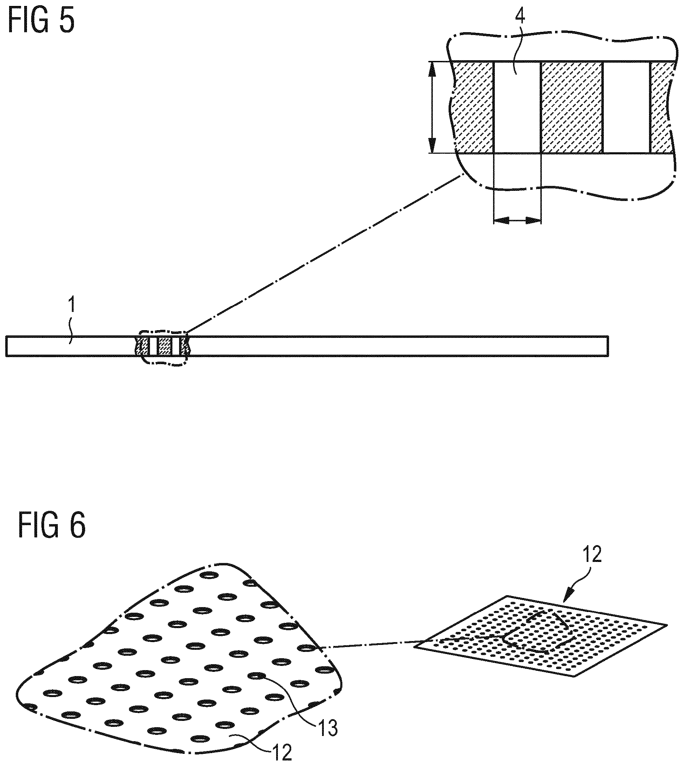

Figur 4 zeigt einen Keramikträger 1. Figur 5 zeigt den Keramikträger 1 aus Figur 4 in einer Schnittdarstellung. Der Keramikträger 1 weist als Keramikmaterial beispielsweise Aluminiumoxid, Al₂O₃, auf. Der Keramikträger 1 weist eine Vielzahl von Löchern 4 auf. Die Höhe des Keramikträgers 1 beträgt 1,3 mm. Der Keramikträgers 1 weist eine quadratische Form mit einer Kantenlänge von jeweils 41 mm auf. Die Löcher 4 haben einen Durchmesser von 0,65 mm.

Die Löcher 4 sind in regelmäßigen Abständen zueinander angeordnet. Die Mittelpunkte der Löcher 4 weisen einen Abstand von 1,5 ± 0,02 mm zueinander auf. Insgesamt sind 225 Löcher 4 in 15 Reihen und 15 Spalten angeordnet. Die Löcher 4 bilden ein quadratisches Muster. Der Bereich, in welchem die Löcher angeordnet sind, hat eine quadratische Fläche mit einer Kantenlänge von 21 ± 0,05 mm.

Der in Figur 4 gezeigte Keramikträger 1 ist mit einer Lotschicht 5 bedruckt. Die Lotschicht 5 bedeckt einen Bereich mit einer Fläche von 30 x 30 mm². Die Lotschicht 5 bedeckt den Bereich, in welchem die Löcher 4 angeordnet sind.

Figur 6 zeigt eine Lotfolie 12. Die Lotfolie 12 kann vor dem Verlöten des Grundkörpers 3 zwischen den Elektrodenkörpern 2 und dem Keramikträger 1 angeordnet werden. Die Lotfolie 12 kann eine wie in Figur 4 gezeigte auf den Keramikträger 1 aufgedruckte Lotschicht ersetzen. Die Lotfolie 12 ist quadratisch und weist eine Kantenlänge von 25 mm auf.

Insgesamt werden zwei Lotfolien 12 zum Verlöten eines Grundkörpers 3 benötigt. Die Lotfolie 12 weist Löcher 13 auf. Die Anordnung der Löcher 13 der Lotfolie 12 stimmt mit der Anordnung der Löcher 4 des Keramikträgers 1 überein. Dadurch werden die Löcher 4 des Keramikträgers 1 nicht durch die Lotfolie 12 überdeckt. Die Löcher 13 der Lotfolie weisen ebenfalls einen Durchmesser von 0,65 mm auf. Die Höhe der Lotfolie beträgt 0,05 mm. Die Lotfolie kann Silber aufweisen. Die Lotfolie besteht zum Beispiel aus einem Silber-Kupfer-Eutektikum oder aus einem anderen Lotmaterial. Beispielsweise weist die Lotfolie 12 den Werkstoff Ag/Cu 72/28 auf oder besteht aus diesem.

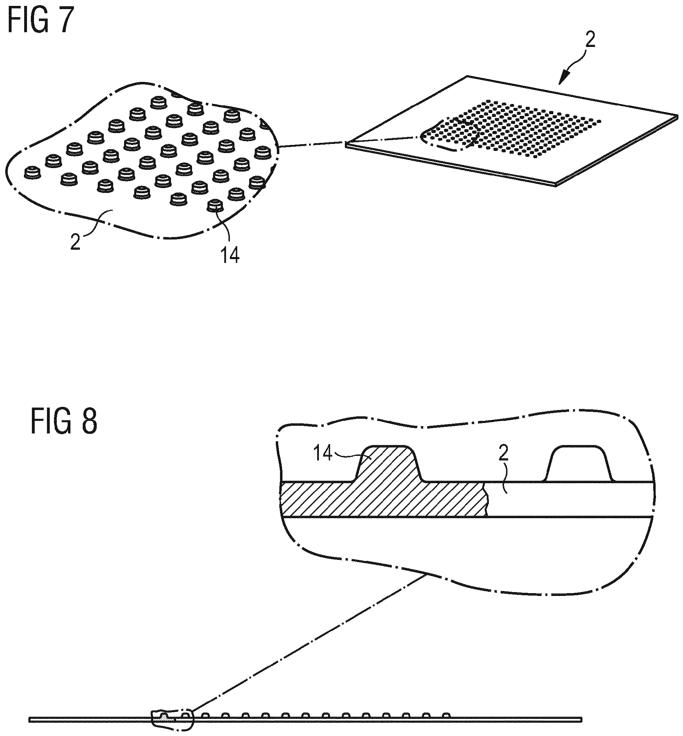

Figur 7 zeigt einen Elektrodenkörper 2. Figur 8 zeigt den Elektrodenkörper aus Figur 7 in einer Schnittdarstellung. Die Fläche des Elektrodenkörpers 2 stimmt mit der Fläche des Keramikträgers 1 überein. Der Elektrodenkörper 2 weist eine Vielzahl von Erhebungen 14 auf. Die Anzahl und Anordnung der Erhebungen 14 stimmt mit der Anzahl und Anordnung der Löcher 4 des Keramikträgers 1 überein. Der Elektrodenkörper 1 weist insgesamt eine Höhe von 0,6 mm auf. Eine Grundhöhe des Elektrodenkörpers 2 ohne Berücksichtigung der Erhebungen 14 beträgt 0,3 mm. Somit weisen die Erhebungen 14 eine Höhe von 0,3 mm auf.

Wie in Figur 8 gezeigt weisen die Erhebungen 14 jeweils die Form eines Konus auf. An seiner breitesten Stelle weist der Konus einen Durchmesser von 0,52 mm auf. Der Konus verengt sich unter einem Winkel von 10°.

Der Elektrodenkörper 2 weist ein elektrisch leitfähiges Material auf oder besteht aus einem solchen. Beispielsweise weist der Elektrodenkörper 2 eine Eisen-Nickel Legierung oder Kupfer auf oder besteht aus einem solchen Material.

### Bezugszeichen

- 1: Keramikträger
- 2: Elektrodenkörper
- 3: Grundkörper
- 4: Loch
- 5: Lotschicht
- 6: Hohlraum
- 7: Ableiter
- 8: Keramikkörper
- 9a: Elektrode
- 9b: Elektrode
- 11: Elektrodenfläche
- 12: Lotfolie
- 13: Loch
- 14: Erhebung
- h: Höhe des Ableiters

## Patentansprüche

1. Verfahren zur Herstellung einer Vielzahl von Ableitern (7) im Verbund, umfassend die Schritte:
- Bereitstellen eines Keramikträgers (1) mit einer Vielzahl von Löchern (4),
- Bereitstellen von zwei Elektrodenkörpern (2),
- Zusammenfügen des Keramikträgers (1) und der beiden Elektrodenkörper (2) unter Gasatmosphäre zu einem Grundkörper (3), wobei der Keramikträger (1) zwischen den Elektrodenkörpern (2) angeordnet wird,
- Verlöten der Elektrodenkörper (2) mit dem Keramikträger (1),
**dadurch gekennzeichnet, dass**
sich jeder der Elektrodenkörper (2) über eine Vielzahl der Löcher (4) des Keramikträgers (1) erstreckt, und dass das Verfahren den Schritt umfasst:
- Vereinzeln des Grundkörpers (3) zu einer Vielzahl gasgefüllter Ableiter (7) und dabei Durchtrennen der Elektrodenkörper (2) und des Keramikträgers (1).

2. Verfahren nach dem vorhergehenden Anspruch, wobei die Elektrodenkörper (2) Erhebungen (14) aufweisen, welche beim Zusammenfügen in die Löcher (4) des Keramikträgers (1) eingreifen.

3. Verfahren nach einem der vorhergehenden Ansprüche, wobei beim Zusammenfügen des Keramikträgers (1) und der Elektrodenkörper (2) zu dem Grundkörper (3) gasgefüllte Hohlräume (6) in den Löchern des Keramikträgers (1) gebildet werden.

4. Verfahren nach einem der vorhergehenden Ansprüche, wobei vor dem Verlöten des Grundkörpers (3) zwischen dem Keramikträger (1) und den Elektrodenkörpern (2) jeweils eine Lotschicht (5) angeordnet wird.

5. Verfahren nach dem vorhergehenden Anspruch, wobei die Lotschicht (5) eine Lotfolie (12) ist.

6. Verfahren nach einem der vorhergehenden Ansprüche, wobei die Hohlräume (6) in den Löchern (4) des Keramikträgers (1) bei dem Verlöten des Grundkörpers (3) durch das Lot abgedichtet werden.

7. Verfahren nach einem der vorhergehenden Ansprüche, wobei der Grundkörper (3) während des Vereinzelns durch Sägen, Wasserstrahlschneiden oder Laserschneiden zu einzelnen Ableitern (7) zerteilt wird.

8. Verfahren nach einem der vorhergehenden Ansprüche, wonach die Gasatmosphäre Edelgase oder Wasserstoff aufweist.

9. Verfahren nach einem der vorhergehenden Ansprüche, wobei der Keramikträger (1) eine Matrix aus 15 x 15 Löchern (4) aufweist.

## Claims

1. Method for manufacturing a plurality of arresters (7) as a composite structure, comprising the steps of:
- providing a ceramic carrier (1) having a plurality of holes (4),
- providing two electrode bodies (2),
- assembling the ceramic carrier (1) and the two electrode bodies (2) under a gas atmosphere into a base body (3), wherein the ceramic carrier (1) is situated between the electrode bodies (2),
- soldering the electrode bodies (2) to the ceramic carrier (1),
**characterized in that**
each of the electrode bodies (2) extends across a plurality of the holes (4) of the ceramic carrier (1), and **in that** the method comprises the step of:
- separating the base body (3) into a plurality of gas-filled arresters (7) and in the process severing the electrode bodies (2) and the ceramic carrier (1).

2. Method according to the preceding claim, wherein the electrode bodies (2) have protuberances (14) which engage with the holes (4) of the ceramic carrier (1) during assembly.

3. Method according to either of the preceding claims, wherein during the assembly of the ceramic carrier (1) and the electrode bodies (2) into the base body (3), gas-filled hollow spaces (6) are formed in the holes of the ceramic carrier (1).

4. Method according to one of the preceding claims, wherein, before soldering the base body (3), a solder layer (5) is arranged between the ceramic carrier (1) and each of the electrode bodies (2).

5. Method according to the preceding claim, wherein the solder layer (5) is a solder foil (12).

6. Method according to one of the preceding claims, wherein the hollow spaces (6) in the holes (4) of the ceramic carrier (1) are sealed via the solder when soldering the base body (3).

7. Method according to one of the preceding claims, wherein the base body (3) is divided into individual arresters (7) during the separation via sawing, water jet cutting, or laser cutting.

8. Method according to one of the preceding claims, wherein the gas atmosphere contains noble gases or hydrogen.

9. Method according to one of the preceding claims, wherein the ceramic carrier (1) includes a matrix made up of 15 x 15 holes (4).

## Revendications

1. Procédé de fabrication d'une multitude de parafoudres (7) en compoundage, le procédé comprenant les étapes suivantes :
- fournir un support céramique {1) pourvu d'une multitude de trous (4),
- fournir deux corps d'électrodes (2),
- assembler le support céramique (1) et les deux corps d'électrode (2) sous atmosphère gazeuse pour former un corps de base (3), le support céramique (1) étant disposé entre les corps d'électrode (2),
- souder le corps d'électrode (2) au support céramique (1),
**caractérisé en ce que**
chacun des corps d'électrode (2) s'étend sur une multitude de trous (4) du support céramique (1), et **en ce que** le procédé comprend l'étape suivante :
- individualiser le corps de base (3) en une multitude de parafoudres à gaz (7) et séparer pour cela le corps d'électrode (2) et le support céramique (1).

2. Procédé selon la revendication précédente, les corps d'électrodes (2) comportant des élévations (14) qui s'engagent dans les trous (4) du support céramique (1) lors de l'assemblage.

3. Procédé selon l'une des revendications précédentes, des cavités (6) remplies de gaz étant formées dans les trous du support céramique (1) lors de l'assemblage du support céramique (1) et du corps d'électrode (2) pour former le corps de base (3).

4. Procédé selon l'une des revendications précédentes, une couche de soudure (5) étant disposée entre le support céramique (1) et chacun des corps d'électrode (2) avant le soudage du corps de base (3).

5. Procédé selon la revendication précédente, la couche de soudure (5) étant une feuille de soudure (12) .

6. Procédé selon l'une des revendications précédentes, les cavités (6) ménagées dans les trous (4) du support céramique (1) étant scellées par la soudure lors du soudage du corps de base (3).

7. Procédé selon l'une des revendications précédentes, le corps de base (3) étant divisé en parafoudres individuels (7) lors de l'individualisation par sciage, découpe au jet d'eau ou découpe au laser.

8. Procédé selon l'une des revendications précédentes, l'atmosphère gazeuse comprenant des gaz rares ou de l'hydrogène.

9. Procédé selon l'une des revendications précédentes, le support céramique (1) comportant une matrice de 15 x 15 trous (4).
